(19) Europäisches Patentamt
European Patent Office
Office européen des brevets

(11) **EP 4 786 528 A1**

(12) **EUROPEAN PATENT APPLICATION**
published in accordance with Art. 153(4) EPC

(43) Date of publication:
**05.08.2026 Bulletin 2026/32**

(21) Application number: **24872065.8**

(22) Date of filing: **20.09.2024**

(51) International Patent Classification (IPC):
***C08J 5/24*** (2006.01)   ***B29C 70/42*** (2006.01)
***C08G 59/20*** (2006.01)

(52) Cooperative Patent Classification (CPC):
**B29C 70/42; C08G 59/20; C08J 5/24**

(86) International application number:
**PCT/JP2024/033602**

(87) International publication number:
**WO 2025/070274 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169784**

(71) Applicant: **Mitsubishi Chemical Corporation
Tokyo 100-8251 (JP)**

(72) Inventors:
• **MISUMI Yuji
Tokyo 100-8251 (JP)**
• **NOHARA Atsushi
Tokyo 100-8251 (JP)**
• **ICHINO Masahiro
Tokyo 100-8251 (JP)**

(74) Representative: **Hoffmann Eitle
Patent- und Rechtsanwälte PartmbB
Arabellastraße 30
81925 München (DE)**

(54) **PREPREG, FIBER-REINFORCED COMPOSITE MATERIAL, AND METHOD FOR PRODUCING MOLDED BODY**

(57) An object of the present invention is to provide a prepreg that exhibits excellent handling properties and is obtained using a resin composition that can be cured in a short amount of time and can suppress resin flow during molding. The prepreg includes an epoxy resin composition and reinforcing fibers, and is characterized in that the epoxy resin composition contains a component (A): a urea compound, a component (B): a thermoplastic resin, a component (C): an epoxy resin having an oxazolidone structure, and a component (D): a bisphenol-type epoxy resin that is solid at 25°C, and satisfies the following conditions (1) and (2). condition (1): The minimum viscosity of the epoxy resin composition measured with a rheometer under a condition of 2°C/min is in a range of from 3.0 to 6.0 Pa·s. condition (2): A gel time value of the epoxy resin composition measured by a Curelastometer (trade name) at 145°C is in a range of from 2.0 to 5.0 min.

**EP 4 786 528 A1**

## Description

Technical Field

The present invention relates to a prepreg, a fiber-reinforced composite material, and a method for producing a molded body.

Background Art

Fiber-reinforced composite materials (FRP) obtained by combining a resin and reinforcing fibers exhibit excellent lightweight properties, rigidity, impact resistance, and other such properties, and thus are widely used in sports and leisure applications, automobiles, and industrial applications. Among such materials, tubular molded bodies made of fiber-reinforced composite materials are widely used in sports and leisure applications such as in fishing rods, golf club shafts, ski poles, and bicycle frames.

Fiber-reinforced composite materials can be obtained by curing and molding a prepreg in which a reinforcing material composed of continuous fibers such as reinforcing fibers is impregnated with a matrix resin. Carbon fibers are widely used as the reinforcing fibers from the viewpoints of strength and elastic modulus development. Epoxy resins are widely used as the matrix resin from the viewpoint of adhesion to carbon fibers. Specific examples of methods for obtaining a fiber-reinforced composite material from a prepreg include molding using an autoclave, press molding, internal pressure molding, and oven molding.

Examples of important properties of a tubular molded body of a fiber-reinforced composite material include bending strength in the longitudinal direction and crushing strength in the diameter direction. Patent Literature 1 proposes a resin composition for a fiber-reinforced composite material that achieves both bending strength in the longitudinal direction and crushing strength in the diameter direction. In addition, materials that can be subjected to high-cycle molding and can contribute to productivity improvements and cost reductions are required for prepregs required for sports and leisure applications, industrial applications, and the like. Patent Literature 2 proposes a resin composition for a fiber-reinforced composite material, with the resin composition being curable in a short amount of time even at a low temperature and exhibiting excellent mechanical properties and heat resistance.

Citation List

Patent Literature

Patent Literature 1: WO 1998/044017
Patent Literature 2: WO 2020/080474

Summary of Invention

Technical Problem

In high-cycle molding, molding is carried out at a high temperature and under a high pressure, and therefore the temperature of the resin composition constituting the prepreg rises during molding, and the viscosity of the resin composition significantly decreases. Through research conducted by the present inventors, it was discovered that with a conventional resin composition used in high-cycle molding, a phenomenon in which resin flows out from within a prepreg due to heating and pressurization in the molding process, that is, a phenomenon of resin flow, causes appearance defects to occur, such as fiber waviness and portions not impregnated with the resin composition.

The present invention was developed in view of the above problems. That is, one object of the present invention is to provide a prepreg that can be cured in a short amount of time and can suppress resin flow during molding.

Solution to Problem

The present invention includes the following embodiments.

[1]: A prepreg containing an epoxy resin composition and reinforcing fibers, wherein

the epoxy resin composition contains the following components (A), (B), (C), and (D), and satisfies the following conditions (1) and (2).

component (A): a urea compound

component (B): a thermoplastic resin

component (C): an epoxy resin having an oxazolidone structure

component (D): a bisphenol-type epoxy resin (excluding the component (C)) that is solid at 25°C

condition (1): The minimum viscosity of the epoxy resin composition measured with a rheometer under a condition of 2°C/min is in a range of from 3.0 Pa·s to 3.1 Pa·s, or in a range from 3.2 Pa·s to 6.0 Pa·s or less, 5.9 Pa·s or less, 5.5 Pa·s or less, 5.0 Pa·s or less, or 4.5 Pa·s or less.

condition (2): A gel time value of the epoxy resin composition measured by a Curelastometer (trade name) at 145°C is in a range of from 2.0 min or longer, 2.1 min or longer, 2.3 min or longer, or 2.5 min or longer to 5.0 min or less, 4.9 min or less, 4.5 min or less, or 4.0 min or less.

[2]: The prepreg according to [1], wherein the median diameter (D50) of the component (A) as measured by a laser diffraction method is 8.0 $\mu$m or less or 7.0 $\mu$m or less.

[3]: The prepreg according to [1] or [2], wherein the component (A) includes 2,4-bis(3,3-dimethylureido)toluene.

[4]: The prepreg according to any one of [1] to [3], wherein the component (B) is a thermoplastic resin that is soluble in a mixture of epoxy resins contained in the epoxy resin composition.

[5]: The prepreg according to any one of [1] to [4], wherein the component (B) has a weight-average molecular weight of 60,000 or greater, or 65,000 or greater.

[6]: The prepreg according to any one of [1] to [5], wherein the weight-average molecular weight of the component (B) is 150,000 or less, or 145,000 or less.

[7]: The prepreg according to any one of [1] to [6], wherein the component (B) contains a polyvinyl formal resin.

[8]: The prepreg according to any one of [1] to [7], wherein the component (C) is solid at 25°C.

[9]: The prepreg according to any one of [1] to [8], wherein the epoxy equivalent of the component (D) is 300 g/eq or greater, or 350 g/eq or greater.

[10]: The prepreg according to any one of [1] to [9], wherein the epoxy equivalent of the component (D) is 1000 g/eq or less, or 950 g/eq or less.

[11]: The prepreg according to any one of [1] to [10], wherein the component (D) is a bisphenol A type epoxy resin.

[12]: The prepreg according to any one of [1] to [11], wherein the prepreg contains the component (A) at an amount of 2 mass% or more, 2.5 mass% or more, or 3 mass% or more, relative to the total mass of the epoxy resin composition.

[13]: The prepreg according to any one of [1] to [12], wherein the prepreg contains the component (A) at an amount of 10 mass% or less, 9.5 mass% or less, 8 mass% or less, or 5 mass% or less, relative to the total mass of the epoxy resin composition.

[14]: The prepreg according to any one of [1] to [13], wherein the prepreg contains the component (B) at an amount of 1 mass% or more, 1.5 mass% or more, or 2 mass% or more, relative to the total mass of the epoxy resin composition.

[15]: The prepreg according to any one of [1] to [14], wherein the prepreg contains the component (B) at an amount of 10 mass% or less, 9.5 mass% or less, 8 mass% or less, or 5 mass% or less, relative to the total mass of the epoxy resin composition.

[16]: The prepreg according to any one of [1] to [15], wherein the total content of the component (C) and the component (D) is 30 mass% or more, 32 mass% or more, 35 mass% or more, or 40 mass% or more, relative to the total mass of the epoxy resin composition.

[17]: The prepreg according to any one of [1] to [16], wherein the total content of the component (C) and the component (D) is 60 mass% or less, 58 mass% or less, or 55 mass% or less, relative to the total mass of the epoxy resin composition.

[18]: The prepreg according to any one of [1] to [17], further satisfying the following condition (3).

condition (3): The viscosity of the epoxy resin composition at 65°C is in a range of 10 Pa·s or greater, 20 Pa·s or greater, 50 Pa·s or greater, 70 Pa·s or greater, or 100 Pa·s or greater.

[19]: The prepreg according to any one of [1] to [18], further satisfying the following condition (3).

condition (3): The viscosity of the epoxy resin composition at 65°C is in a range of 1000 Pa·s or less, 900 Pa·s or less, 500 Pa·s or less, 300 Pa·s or less, or 200 Pa·s or less.

[20]: The prepreg according to any one of [1] to [19], further containing the following component (E).

component (E): At least one selected from dicyandiamide and dicyandiamide derivatives

[21]: The prepreg according to any one of [1] to [20], wherein the reinforcing fibers include carbon fibers.

[22]: A fiber-reinforced composite material produced by curing the prepreg described in any one of [1] to [21].

[23]: A prepreg containing an epoxy resin composition and reinforcing fibers,

the epoxy resin composition containing the following components (A1), (B1), (C), and (D).

component (A1): a urea compound containing 2,4-bis (3,3-dimethyl ureido)toluene

component (B1): a polyvinyl formal resin having a weight-average molecular weight of 60,000 or greater or 65,000 or greater

component (C): an epoxy resin having an oxazolidone structure

component (D): a bisphenol-type epoxy resin (excluding the component (C)) that is solid at 25°C

[24]: The prepreg according to [23], satisfying the following condition (1).

condition (1): The minimum viscosity of the epoxy resin composition measured with a rheometer under a condition of 2°C/min is in a range of 3.0 Pa·s or greater, 3.1 Pa·s or greater, or 3.2 Pa·s or greater.

[25]: The prepreg according to [23] or [24], satisfying the following condition (1).

condition (1): The minimum viscosity of the epoxy resin composition measured with a rheometer under a condition of 2°C/min is in a range of 6.0 Pa·s or less, 5.9 Pa·s or less, 5.5 Pa·s or less, 5.0 Pa·s or less, or 4.5 Pa·s or less.

[26]: The prepreg according to any one of [23] to [25], satisfying the following condition (2).

condition (2): A gel time value of the epoxy resin composition measured by a Curelastometer (trade name) at 145°C is in a range of 2.0 min or longer, 2.1 min or longer, 2.3 min or longer, or 2.5 min or longer.

[27]: The prepreg according to any one of [23] to [26], satisfying the following condition (2).

condition (2): A gel time value of the epoxy resin composition measured by a Curelastometer (trade name) at 145°C is in a range of 5.0 min or less, 4.9 min or less, 4.5 min or less, or 4.0 min or less.

[28]: The prepreg according to any one of [23] to [27], wherein the median diameter (D50) of the component (A1) as measured by a laser diffraction method is 8.0 μm or less or 7.0 μm or less.

[29]: The prepreg according to any one of [23] to [28], wherein the component (C) is solid at 25°C.

[30]: The prepreg according to any one of [23] to [29], wherein the epoxy equivalent of the component (D) is 300 g/eq or greater, or 350 g/eq or greater.

[31]: The prepreg according to any one of [23] to [30], wherein the epoxy equivalent of the component (D) is 1000 g/eq or less, or 950 g/eq or less.

[32]: The prepreg according to any one of [23] to [31], wherein the component (D) is a bisphenol A type epoxy resin.

[33]: The prepreg according to any one of [23] to [32], wherein the prepreg contains the component (A1) at an amount of 2 mass% or more, 2.5 mass% or more, or 3 mass% or more, relative to the total mass of the epoxy resin composition.

[34]: The prepreg according to any one of [23] to [33], wherein the prepreg contains the component (A) at an amount of 10 mass% or less, 9.5 mass% or less, 8 mass% or less, or 5 mass% or less, relative to the total mass of the epoxy resin composition.

[35]: The prepreg according to any one of [23] to [34], wherein the prepreg contains the component (B1) at an amount of 1 mass% or more, 1.5 mass% or more, or 2 mass% or more, relative to the total mass of the epoxy resin composition.

[36]: The prepreg according to any one of [23] to [35], wherein the prepreg contains the component (B1) at an amount of 10 mass% or less, 9.5 mass% or less, 8 mass% or less, or 5 mass% or less, relative to the total mass of the epoxy resin composition.

[37]: The prepreg according to any one of [23] to [36], wherein the total content of the component (C) and the component (D) is 30 mass% or more, 32 mass% or more, 35 mass% or more, or 40 mass% or more, relative to the total mass of the epoxy resin composition.

[38]: The prepreg according to any one of [23] to [37], wherein the total content of the component (C) and the component (D) is 60 mass% or less, 58 mass% or less, or 55 mass% or less, relative to the total mass of the epoxy resin composition.

[39]: The prepreg according to any one of [23] to [38], further satisfying the following condition (3).

condition (3): The viscosity of the epoxy resin composition at 65°C is in a range of 10 Pa·s or greater, 20 Pa·s or greater, 50 Pa·s or greater, 70 Pa·s or greater, or 100 Pa·s or greater.

[40]: The prepreg according to any one of [23] to [39], further satisfying the following condition (3).

condition (3): The viscosity of the epoxy resin composition at 65°C is in the range of 1000 Pa·s or less, 900 Pa·s or less, 500 Pa·s or less, 300 Pa·s or less, or 200 Pa·s or less.

[41]: The prepreg according to any one of [23] to [40], further containing the following component (E).

component (E): At least one selected from dicyandiamide and dicyandiamide derivatives

[42]: The prepreg according to any one of [23] to [41], wherein the reinforcing fibers include carbon fibers.

[43]: A method for producing a molded body,

the method including heating a prepreg containing an epoxy resin composition and reinforcing fibers to a temperature of 130°C or higher or 140°C or higher with the prepreg being placed in a mold, and

the epoxy resin composition containing the following components (A1) and (B1).

component (A1): 2,4-bis(3,3-dimethylureido)toluene

component (B1): a polyvinyl formal resin having a weight-average molecular weight of 60,000 or greater or 65,000 or greater

[44]: The method for producing a molded body according to [43], wherein the prepreg is arranged in a tubular shape and heated to produce a tubular molded body.

[45]: The method for producing a molded body according to [44], the method further including expanding a medium from the inside of a tubular precursor with the prepreg arranged in a tubular shape, and thereby pressing the tubular precursor against a mold and molding the tubular precursor.

[46]: The method for producing a molded body according to any one of [43] to [45], wherein the epoxy resin composition further includes the following component (C).

component (C): an epoxy resin having an oxazolidone structure

[47]: The method for producing a molded body according to any one of [43] to [46], wherein the epoxy resin composition further includes the following component (D).

component (D): a bisphenol-type epoxy resin that is solid at 25°C (excluding a component (C) of an epoxy resin having an oxazolidone structure)

[48]: The method for producing a molded body according to any one of [43] to [47], wherein the total content of the following component (C) and the following component (D) is 60 mass% or less, 58 mass% or less, or 55 mass% or less, relative to the total mass of the epoxy resin composition.

component (C): an epoxy resin having an oxazolidone structure
component (D): a bisphenol-type epoxy resin (excluding the component (C)) that is solid at 25°C

[49]: The method for producing a molded body according to any one of [43] to [48], wherein the total content of the following component (C) and the following component (D) is 30 mass% or more, 32 mass% or more, 35 mass% or more, or 40 mass% or more, relative to the total mass of the epoxy resin composition.

component (C): an epoxy resin having an oxazolidone structure
component (D): a bisphenol-type epoxy resin (excluding the component (C)) that is solid at 25°C

[50]: The method for producing a molded body according to any one of [43] to [49], wherein the tubular molded body has an annular curved portion, and
the method includes bending the tubular precursor into an annular shape.

Advantageous Effects of Invention

According to the present invention, a prepreg that can be cured in a short amount of time and can suppress resin flow during molding can be provided.

Description of Embodiments

Hereinafter, the present invention will be described in detail.

Prepreg

An embodiment of the present invention relates to a prepreg. The prepreg of the present invention contains an epoxy resin composition and reinforcing fibers.

Constitution of Epoxy Resin Composition

The epoxy resin composition contained in the prepreg according to one example of the present embodiment contains the following components (A), (B), (C), and (D), and preferably further contains the following component (E).

component (A): a urea compound
component (B): a thermoplastic resin
component (C): an epoxy resin having an oxazolidone structure
component (D): a bisphenol-type epoxy resin (excluding the component (C)) that is solid at 25°C
component (E): at least one selected from dicyandiamide and dicyandiamide derivatives

The epoxy resin composition used in the present embodiment also satisfies the following conditions (1) and (2), and preferably further satisfies the following condition (3).

condition (1): The minimum viscosity of the epoxy resin composition measured with a rheometer under a condition of 2°C/min is in a range of from 3.0 to 6.0 Pa·s.

condition (2): A gel time value of the epoxy resin composition measured by a Curelastometer (trade name) at 145°C is in a range of from 2.0 to 5.0 min.

condition (3): The epoxy resin composition has a viscosity at 65°C in a range of from 10 to 1000 Pa·s.

Component (A)

The component (A) is a urea compound. The urea compound generates isocyanate groups and dimethylamine when heated at a high temperature, the isocyanate groups and the dimethylamine react with epoxy groups and generate heat, and the heat further promotes a reaction between the resulting -NH groups and the epoxy groups. Therefore, when the epoxy resin composition contains the component (A), resin flow during molding of the resulting prepreg can be suppressed.

The urea compound is not particularly limited, and examples thereof include aromatic dimethylurea in which a dimethylureido group is bonded to an aromatic ring, and aliphatic dimethylurea in which a dimethylureido group is bonded to an aliphatic compound. One of these urea compounds may be used alone, or two or more thereof may be used in combination. Among these, aromatic dimethylurea is preferable from the viewpoint of reducing resin flow.

Examples of the aromatic dimethylurea include phenyldimethylurea, methylene bis(phenyldimethylurea), and tolylene bis(dimethylurea). More specific examples thereof include 4,4'-methylenebis(phenyldimethylurea) (MBPDMU), 3-phenyl-1,1-dimethylurea (PDMU), 3-(3,4-dichlorophenyl)-1,1-dimethylurea (DCMU), 3-(3-chloro-4-methylphenyl)-1,1-dimethylurea, and 2,4-bis(3,3-dimethylureido)toluene (TBDMU). Among these, from the viewpoint of reducing resin flow, 2,4-bis(3,3-dimethylureido)toluene (TBDMU) is more preferable.

Examples of the aliphatic dimethylurea include dimethylurea obtained from isophorone diisocyanate and dimethylamine, dimethylurea obtained from m-xylylene diisocyanate and dimethylamine, and dimethylurea obtained from hexamethylene diisocyanate and dimethylamine.

The median diameter (D50) of the component (A) as measured by a laser diffraction method is preferably 8.0 $\mu$m or less, and more preferably 7.0 $\mu$m or less. When the median diameter (D50) of the component (A) is 8.0 $\mu$m or less, the thixotropy of the epoxy resin composition can be enhanced, and resin flow during molding can be suppressed. In addition, since the surface area relative to the mass of the component (A) is increased, the reaction rate is improved, and the epoxy resin composition can be cured in a shorter amount of time. The median diameter (D50) of the component (A) can be adjusted by grinding the component (A) in advance using a bead mill, a three-roll mill, or the like. For measurements through a laser diffraction method, for example, the AEROTRAC SPR (Model: 7340) (available from Nikkiso Co., Ltd.) can be used. The lower limit of the median diameter (D50) of the component (A) is not particularly limited, but may be, for example, 0.1 $\mu$m or greater.

The median diameter (D50) of the component (A) as measured by the laser diffraction method is preferably equal to or less than the average fiber diameter of all the carbon fibers contained in the reinforcing fiber base material. When the median diameter (D50) is equal to or less than the average fiber diameter of all the carbon fibers, the component (A) is not localized on the prepreg surfaces, and therefore surface appearance quality can be improved. In addition, since the component (A) spreads throughout the entire fiber-reinforced composite material, curing defects are less likely to occur, and resin flow during molding can be suppressed.

The content of the component (A) relative to the total mass of the epoxy resin composition is preferably 2 mass% or more, more preferably 2.5 mass% or more, and even more preferably 3 mass% or more. When the content of the component (A) is equal to or greater than the above lower limit value, resin flow during molding is suppressed. The content of the component (A) relative to the total mass of the epoxy resin composition is preferably 10 mass% or less, more preferably 9.5 mass% or less, still more preferably 8 mass% or less, and particularly preferably 5 mass% or less. When the content of the component (A) is equal to or less than the above upper limit value, an epoxy resin composition having excellent storage stability and mechanical properties can be obtained. The preferable lower limit and upper limit of the content of the component (A) can be optionally combined, and can be, for example, from 2 to 10 mass%, from 2 to 9.5 mass%, from 2.5 to 8 mass%, or from 3 to 5 mass%.

Component (B)

The component (B) is a thermoplastic resin. The thermoplastic resin is added to control viscoelasticity. When the epoxy resin composition contains the component (B), the viscosity of the epoxy resin composition can be adjusted, and a high level of thixotropy is exhibited, and thereby resin flow during molding can be suppressed. The component (B) is preferably a component that is soluble in a mixture of the epoxy resins contained in the epoxy resin composition. The term "soluble" as used herein means a state in which particles cannot be confirmed in the epoxy resin composition through an optical method such as use of an optical microscope or visual observation.

The weight-average molecular weight of the component (B) is preferably 60,000 or greater, and more preferably 65,000 or greater. When the weight-average molecular weight of the component (B) is equal to or greater than the above lower limit value, the minimum viscosity of the epoxy resin composition is improved, and resin flow during molding can be suppressed. The weight-average molecular weight of the component (B) is preferably 150,000 or less, and more preferably 145,000 or less. When the weight-average molecular weight of the component (B) is equal to or less than the above upper limit value, the handling properties of the prepreg at room temperature can be improved while suppressing resin flow during molding. The preferable lower limit and upper limit of the weight-average molecular weight of the component (B) can be optionally combined, and can be, for example, from 60,000 to 150,000, or from 65,000 to 145,000. The weight-average molecular weight of the component (B) is measured by a later-described method through gel permeation chromatography (GPC).

Examples of the component (B) include, but are not limited to, polyamide, polyester, polycarbonate, polyethersulfone, polyphenylene ether, polyphenylene sulfide, polyetheretherketone, polyetherketone, polyetherimide, polyimide, polytetrafluoroethylene, polyether, polyolefin, polyarylate, polysulfone, polyacrylonitrile styrene, polystyrene, polyacrylonitrile, polymethyl methacrylate, acrylonitrile-butadiene-styrene copolymer (ABS resin), acrylonitrile-ethylene-propylene-diene-styrene copolymer (AES resin), acrylonitrile-styrene-alkyl (meth)acrylate copolymer (ASA resin), polyvinyl chloride, polyvinyl formal, and phenoxy resin. One of these thermoplastic resins may be used alone, or two or more thereof may be used in combination. From the viewpoint of suppressing resin flow, a polyvinyl formal resin is preferred. By using the polyvinyl formal resin, resin flow during molding can be suppressed.

Examples of commercially available products of the polyvinyl formal resin include, but are not limited to, VINYLEC L (weight-average molecular weight according to the catalog value: 66,000), VINYLEC H (weight-average molecular weight according to the catalog value: 73,000), and VINYLEC E (all are trade names, available from JNC Corporation).

The content of the component (B) relative to the total mass of the epoxy resin composition is preferably 1 mass% or more, more preferably 1.5 mass% or more, and even more preferably 2 mass% or more. When the content of the component (B) is equal to or greater than the above lower limit value, the epoxy resin composition can exhibit a high level of thixotropy, and thus resin flow during molding can be suppressed. The content of the component (B) relative to the total mass of the epoxy resin composition is preferably 10 mass% or less, more preferably 9.5 mass% or less, still more preferably 8 mass% or less, and particularly preferably 5 mass% or less. When the content of the component (B) is equal to or less than the above upper limit value, the handling properties of the prepreg at room temperature are improved. Preferable lower and upper limit values of the content of the component (B) can be optionally combined, and can be, for example, from 1 to 10 mass%, from 1 to 9.5 mass%, from 1.5 to 8 mass%, or from 2 to 5 mass%.


Component (C)

The component (C) is an epoxy resin having an oxazolidone structure. When the epoxy resin composition contains the component (C), the viscosity of the epoxy resin composition increases, and resin flow during molding can be suppressed.

The oxazolidone structure is formed by an addition reaction of isocyanate groups and epoxy groups. The method for producing the epoxy resin having an oxazolidone structure is not particularly limited, and for example, the epoxy resin having an oxazolidone structure can be obtained in an approximately theoretical amount by reacting an isocyanate compound and an epoxy resin in the presence of a catalyst used for oxazolidone ring formation. The isocyanate compound and the epoxy resin are preferably reacted at an equivalent ratio (isocyanate compound : epoxy resin) in a range from 1:2 to 1:10. When the equivalent ratio of the isocyanate compound and the epoxy resin is within the above range, the heat resistance and water resistance of the resin cured product tend to be further improved.

The isocyanate compound serving as a raw material for the component (C) is not particularly limited, but an isocyanate compound having a plurality of isocyanate groups is preferred in order to incorporate an oxazolidone structure into the skeleton of the epoxy resin. Moreover, in order to obtain a resin cured product having high heat resistance, a diisocyanate having a rigid structure is preferred. Specific examples of the isocyanate compound include, but are not limited to, bifunctional isocyanate compounds, such as methane diisocyanate, butane-1,1-diisocyanate, ethane-1,2-diisocyanate, butane-1,2-diisocyanate, trans-vinylene diisocyanate, propane-1,3-diisocyanate, butane-1,4-diisocyanate, 2-butene-1,4-diisocyanate, 2-methylbutene-1,4-diisocyanate, 2-methylbutane-1,4-diisocyanate, pentane-1,5-diisocyanate, 2,2-dimethylpentane-1,5-diisocyanate, hexane-1,6-diisocyanate, heptane-1,7-diisocyanate, octane-1,8-diisocyanate, nonane-1,9-diisocyanate, decane-1,10-diisocyanate, dimethylsilane diisocyanate, diphenylsilane diisocyanate, $\omega,\omega'$-1,3-dimethylbenzene diisocyanate, $\omega,\omega'$-1,4-dimethylbenzene diisocyanate, $\omega,\omega'$-1,3-dimethylcyclohexane diisocyanate, $\omega,\omega'$-1,4-dimethylcyclohexane diisocyanate, $\omega,\omega'$-1,4-dimethylnaphthalene diisocyanate, $\omega,\omega'$-1,5-dimethylnaphthalene diisocyanate, cyclohexane-1,3-diisocyanate, cyclohexane-1,4-diisocyanate, 3-isocyanatomethyl-3,5,5-trimethylcyclohexyl isocyanate, dicyclohexylmethane-4,4'-diisocyanate, 1,3-phenylene diisocyanate, 1,4-phenylene diisocyanate, 1-methylbenzene-2,4-diisocyanate, 1-methylbenzene-2,5-diisocyanate, 1-methylbenzene-2,6-diisocyanate, 1-methylbenzene-3,5-diisocyanate, diphenylether-4,4'-diisocyanate, diphenylether-2,4'-diisocyanate, naphthalene-1,4-diisocyanate, naphthalene-1,5-diisocyanate, biphenyl-4,4'-diisocyanate, 3,3'-dimethylbiphenyl-4,4'-diisocyanate, 2,3'-dimethoxybisphenyl-4,4'-diisocyanate, diphenylmethane-4,4'-diisocyanate, 3,3'-dimethoxydiphenylmethane-4,4'-diisocyanate, 4,4'-dimethoxydiphenylmethane-3,3'-diisocyanate, norbornene diisocyanate, diphenylsulfide-4,4'-diisocyanate, and diphenylsulfone-4,4'-diisocyanate; trifunctional or higher isocyanate compounds such as polymethylene polyphenyl isocyanate and triphenylmethane triisocyanate; polymers such as dimers and trimers of the above isocyanate compounds, blocked isocyanates masked with an alcohol or phenol, and bis-urethane compounds. A single type of these isocyanate compounds may be used alone, or two or more types thereof may be used in combination.

Among the above isocyanate compounds, from the viewpoint of improving the heat resistance of the resin cured product, a bifunctional isocyanate compound or a trifunctional isocyanate compound is preferable, a bifunctional isocyanate compound is more preferable, and a bifunctional isocyanate compound having a skeleton selected from isophorone, benzene, toluene, diphenylmethane, naphthalene, norbornene, polymethylene, polyphenylene polyphenyl, and hexamethylene is still more preferable. When the number of functional groups of the isocyanate compound is moderately large, a decrease in the storage stability of the epoxy resin composition can be suppressed. In addition, when the number of functional groups of the isocyanate compound is moderately small, a decrease in heat resistance of the resin cured product can be suppressed.

As the epoxy resin serving as a raw material of the component (C), various epoxy resins can be used, but an epoxy resin having epoxy groups at both ends of the molecule is preferable in order to efficiently incorporate the oxazolidone structure into the skeleton of the epoxy resin. Specific examples of the epoxy resin include, but are not limited to, epoxy resins derived from dihydric phenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromo bisphenol A, and biphenyl; epoxy resins derived from tris(glycidyloxyphenyl)alkanes such as 1,1,1-tris(4-hydroxyphenyl) methane, 1,1,1-(4-hydroxyphenyl)ethane, and 4,4-[1-[4-[1-(4-hydroxyphenyl)-1-methylethyl]phenyl]ethylidene] bisphenol; and epoxy resins derived from novolacs such as phenol novolac, cresol novolac, and bisphenol A novolac. A single type of these epoxy resins may be used alone, or two or more types thereof may be used in combination. The epoxy resin is preferably a bisphenol A type epoxy resin, a bisphenol F type epoxy resin, or a biphenyl-type epoxy resin from the viewpoint of being able to suppress an excessive increase in the viscosity of the component (C).

An addition reaction product obtained by mixing and reacting one molecule of a bifunctional isocyanate having a toluene skeleton such as tolylene diisocyanate as the isocyanate compound and two molecules of bisphenol A diglycidyl ether as the epoxy resin is particularly preferred in order to improve the workability of the prepreg at normal temperature and the heat resistance of the resin cured product. Examples of the bifunctional isocyanate having a toluene skeleton include 1-methylbenzene-2,4-diisocyanate, 1-methylbenzene-2,5-diisocyanate, 1-methylbenzene-2,6-diisocyanate, and 1-methylbenzene-3,5-diisocyanate.

Examples of commercially available products of epoxy resins having an oxazolidone structure include, but are not limited to, AER4152, AER4151, LSA3301, and LSA2102 (all trade names, available from Asahi Kasei E-Materials Corporation); ACR1348 (trade name, available from ADEKA Corporation); and DER (registered trade name, same hereinafter) 852 and 858 (both trade names, available from Dow Chemical Japan Ltd.); TSR-400 (trade name, available from DIC Corporation); and YD-952 (trade name, available from Nippon Steel Chemical & Material Co., Ltd.). Any of these is preferably used in the present invention, and YD-952 is particularly preferable. A single type of the component (C) may be used alone, or two or more types thereof may be used in combination.

The component (C) is preferably a solid at 25°C. When the component (C) is a solid at 25°C, the viscosity of the epoxy resin composition increases, and thus resin fluidity during molding is suppressed, and the tendency of suppressing the outflow of resin from the prepreg due to heating and pressurization is enhanced.

Component (D)

The component (D) is a bisphenol-type epoxy resin that is solid at 25°C, excluding the component (C). When the epoxy resin composition contains the component (D), the viscosity of the epoxy resin composition increases, and thus resin fluidity during molding is suppressed, and the outflow of resin from the prepreg due to heating and pressurization can be suppressed. That is, resin flow of the obtained prepreg can be suppressed.

The softening point of the component (D) is preferably 30°C or higher, more preferably 40°C or higher, and still more preferably 50°C or higher. The upper limit of the softening point of the component (D) is not particularly limited, but may be, for example, 150°C or lower.

The epoxy equivalent of the component (D) is preferably 300 g/eq or greater, and more preferably 350 g/eq or greater. When the epoxy equivalent of the component (D) is equal to or greater than the above lower limit value, both reactivity of the epoxy resin composition and the suppression of resin flow during molding can be achieved. Moreover, the epoxy equivalent of the component (D) is preferably 1000 g/eq or less, and more preferably 950 g/eq or less. When the epoxy equivalent of the component (D) is equal to or less than the above upper limit value, impregnation of the epoxy resin composition into the reinforcing fiber base material is improved. The preferable lower limit and upper limit of the epoxy equivalent of the component (D) can be optionally combined, and can be, for example, from 300 to 1000 g/eq, or from 350 to 950 g/eq.

The component (D) is not particularly limited as long as it is a bisphenol-type epoxy resin that is solid at 25°C. A single type of bisphenol-type epoxy resin may be used alone, or two or more types thereof may be used in combination. Examples of the bisphenol-type epoxy resin include a bisphenol A type epoxy resin, a bisphenol F type epoxy resin, a bisphenol E type epoxy resin, a bisphenol S type epoxy resin, a bisphenol C type epoxy resin, a bisphenol M type epoxy resin, a bisphenol AF type epoxy resin, and a bisphenol BP type epoxy resin. Among these, a bisphenol A type epoxy resin is preferred from the viewpoint of improving the mechanical properties of the epoxy resin composition.

Examples of commercially available products of bisphenol A-type epoxy resins that are solid at 25°C include, but are not limited to, YD-011, YD-012, YD-013, and YD-014 (all trade names, available from Nippon Steel Chemical & Material Co., Ltd.); and jER1001, jER1002, jER1003, and jER1004 (all trade names, available from Mitsubishi Chemical Corporation). A single type of the component (D) may be used alone, or two or more types thereof may be used in combination.

The total content of the component (C) and the component (D) relative to the total mass of the epoxy resin composition is preferably 30 mass% or more, more preferably 32 mass% or more, still more preferably 35 mass% or more, and particularly preferably 40 mass% or more. When the total content of the component (C) and the component (D) is equal to or greater than the above lower limit value, the minimum viscosity of the epoxy resin composition is improved, and resin flow during molding can be suppressed. The total content of the component (C) and the component (D) relative to the total mass of the epoxy resin composition is preferably 60 mass% or less, more preferably 58 mass% or less, and still more preferably 55 mass% or less. When the total content of the component (C) and the component (D) is equal to or less than the above upper limit value, impregnation of the epoxy resin composition into the reinforcing fiber base material is improved, and the generation of voids in the fiber-reinforced composite material after molding can be suppressed. The preferable lower limit and upper limit of the total content of the component (C) and the component (D) can be optionally combined, and can be, for example, from 30 to 60 mass%, from 32 to 60 mass%, from 35 to 58 mass%, or from 40 to 55 mass%.

Component (E)

The component (E) is at least one selected from dicyandiamide and dicyandiamide derivatives. Dicyandiamide and dicyandiamide derivatives have a high melting point and low miscibility with epoxy resins in a low temperature region. When the epoxy resin composition contains the component (E), an epoxy resin composition having an excellent pot life while suppressing resin flow during molding is obtained, and a resin cured product having high mechanical properties is obtained.

Examples of the dicyandiamide derivative include derivatives obtained by bonding dicyandiamide with various compounds such as an epoxy resin, a vinyl compound, an acrylic compound, and 9,10-dihydro-9-oxa-10-phosphaphenanthrene-10-oxide. As the component (E), dicyandiamide is preferable from the viewpoint of reactivity.

In a case in which the epoxy resin composition contains the component (E), the content of the component (E) relative to the total mass of the epoxy resin composition is preferably 4 mass% or more, and more preferably 4.5 mass% or more, from the viewpoint of suppressing resin flow of the epoxy resin composition. Moreover, from the viewpoint of the storage stability of the epoxy resin composition, the content of the component (E) relative to the total mass of the epoxy resin composition is preferably 14 mass% or less and more preferably 13.5 mass% or less. The preferable lower limit and upper limit of the content of the component (E) can be optionally combined, and can be, for example, from 4 to 14 mass%, or from 4.5 to 13.5 mass%.

Other Components

The epoxy resin composition may further contain a component (hereinafter, may be referred to as "other component") in addition to the above-described components. Examples of the other components include a curing agent other than the component (A) (hereinafter, also referred to as an "other curing agent"), an epoxy resin other than the component (C) and the component (D) (hereinafter, also referred to as an "other epoxy resin"), rubber particles, and additives.

The other curing agent is not limited in structure as long as the other curing agent cures the epoxy resins. Examples of the other curing agent include amine-based curing agents such as dicyandiamide, aliphatic amines, alicyclic amines, aromatic amines, and imidazole compounds, as well as acid anhydrides, phenols, and boron chloride amine complexes. A single type of these curing agents may be used alone, or two or more types thereof may be used in combination.

Other epoxy resins that can be used are epoxy resins that are liquid or semi-solid at 25°C. Examples of the other epoxy resins include, but are not limited to, those that are liquid or semi-solid at 25°C, such as bisphenol-type epoxy resins, biphenyl-type epoxy resins, naphthalene-type epoxy resins, phenol novolac-type epoxy resins, cresol novolac-type epoxy resins, and glycidylamine-type epoxy resins. Other examples of the other epoxy resins that may be used include those that are solid at 25°C, such as bisphenol-type epoxy resins, biphenyl-type epoxy resins, naphthalene-type epoxy resins, phenol novolac-type epoxy resins, cresol novolac-type epoxy resins, and glycidyl amine type-epoxy resins. A single type of these epoxy resins may be used alone, or two or more types thereof may be used in combination.

As the rubber particles, synthetic rubber or natural rubber can be used, and examples thereof include those having a structure derived from an alkyl (meth)acrylate, butadiene, isoprene, chloroprene, styrene, α-alkylstyrene, acrylonitrile, or methacrylonitrile. Examples of the rubber particles include, but are not limited to, silicone rubber particles, fluororubber particles, ethylene vinyl acetate rubber particles, acrylonitrile butadiene rubber particles, styrene butadiene rubber particles, acrylic rubber particles, and core-shell rubber particles. Rubber particles of a single type may be used alone, or two or more types thereof may be used in combination. When the epoxy resin composition contains rubber particles, the fluidity of the epoxy resin composition can be suppressed, and resin flow of the resulting prepreg can be suppressed.

As the additives, various known additives may be used within a range in which the effects of the present invention are not impaired. Examples of the additives include inorganic fillers, internal mold release agents, organic pigments, and inorganic pigments. More specific examples of the additives include, but are not limited to, flame retardants (such as phosphinic acid metal salts, aluminum hydroxide, and magnesium hydroxide); inorganic oxides and other auxiliary agents (such as antimony compounds, zinc borate, zinc stannate, Mo compounds, ZrO, zinc sulfide, zeolite, and titanium oxide); mold release agents such as silicone oils, wet dispersing agents, antifoaming agents, defoaming agents, natural waxes, synthetic waxes, metal salts of linear fatty acids, acid amides, esters, and paraffins; inorganic fillers such as powders and glass fibers such as crystalline silica, fused silica, calcium silicate, alumina, calcium carbonate, talc, and barium sulfate, and carbon fibers having an approximate fiber length of from 0.01 mm to 10 mm; colorants such as carbon black and red iron oxide; and silane coupling agents. A single type of additive may be used alone, or two or more types thereof may be used in combination.

Relative to the total mass of the epoxy resin composition, the composition of the epoxy resin composition may include, for example, from 2 to 10 mass% of the component (A), from 1 to 10 mass% of the component (B), and from 30 to 60 mass% of the total of the component (C) and the component (D), and may further include from 4 to 14 mass% of the component (E). However, the total of the respective components may not exceed 100 mass%. The lower limit and upper limit of the contents of each of the components (A) to (E) can be any combination of the lower limit and the upper limit described above for each component.

Physical Properties of Epoxy Resin Composition

As described above, the epoxy resin composition satisfies the conditions (1) and (2). When the epoxy resin composition satisfies the conditions (1) and (2), the epoxy resin composition exhibits thixotropy, and the reaction starting point is shifted to an earlier stage. As a result, an epoxy resin composition for a fiber-reinforced composite material that can be cured in a short amount of time and can suppress resin flow during molding can be obtained.

Condition (1)

The fluidity of the resin during molding can be suppressed by setting the minimum viscosity of the epoxy resin composition to within a specified range. The minimum viscosity as used herein refers to the lowest viscosity measured using a rheometer under a condition of 2°C/min. As the rheometer, for example, the HAAKE MARS 40 (available from Thermo Fisher Scientific, Inc.) can be used.

The minimum viscosity of the epoxy resin composition is 3.0 Pa·s or greater, preferably 3.1 Pa·s or greater, and more preferably 3.2 Pa·s or greater. When the minimum viscosity is 3.0 Pa·s or greater, the fluidity of the resin during molding is reduced, and resin flow can be significantly suppressed. The minimum viscosity of the epoxy resin composition is also 6.0 Pa·s or less, preferably 5.9 Pa·s or less, more preferably 5.5 Pa·s or less, even more preferably 5.0 Pa·s or less, and particularly preferably 4.5 Pa·s or less. When the minimum viscosity is 6.0 Pa·s or less, impregnation of the epoxy resin composition into the reinforcing fiber base material is improved. The preferable lower limit and upper limit of the minimum viscosity of the epoxy resin composition can be optionally combined, and can be, for example, from 3.0 to 6.0 Pa·s, from 3.0 to 5.9 Pa·s, from 3.1 to 5.5 Pa·s, from 3.1 to 5.0 Pa·s, or from 3.2 to 4.5 Pa·s.

The minimum viscosity of the epoxy resin composition can be adjusted to a specified range by adjusting the content and median diameter of the component (A), and the content and weight-average molecular weight of the component (B).

Condition (2)

The reaction starting point of the epoxy resin composition can be adjusted by setting the gel time value measured at 145°C using a Curelastometer (trade name) to a specified range. As the Curelastometer (trade name), for example, the Curelastometer (trade name) 7 Type P (available from JSR Trading Co., Ltd.) can be used.

The gel time value of the epoxy resin composition is 2.0 min or longer, preferably 2.1 min or longer, more preferably 2.3 min or longer, and even more preferably 2.5 min or longer. When the gel time value is 2.0 min or longer, the thermal stability of the epoxy resin composition is improved. The gel time value of the epoxy resin composition is also 5.0 min or less, preferably 4.9 min or less, more preferably 4.5 min or less, and even more preferably 4.0 min or less. When the gel time value is 5.0 min or less, the composition can be molded in a short amount of time, thereby suppressing resin flow during molding. The preferable lower limit and upper limit of the gel time value of the epoxy resin composition can be optionally combined, and can be, for example, from 2.0 to 5.0 min, from 2.1 to 4.9 min, from 2.3 to 4.5 min, or from 2.5 to 4.0 min.

The gel time value of the epoxy resin composition can be adjusted to a specified range by the content and median diameter of the component (A), the content of the component (E), and the content mass ratio of the component (A) and the component (E).

Condition (3)

The viscosity of the epoxy resin composition at 65°C can be measured using a rheometer under the condition of 2°C/min. As the rheometer, for example, the HAAKE MARS 40 (available from Thermo Fisher Scientific, Inc.) can be used.

The viscosity at 65°C of the epoxy resin composition is preferably 10 Pa·s or greater, more preferably 20 Pa·s or greater, even more preferably 50 Pa·s or greater, particularly preferably 70 Pa·s or greater, and most preferably 100 Pa·s or greater. When the viscosity is 10 Pa·s or greater, sufficient tackiness is obtained on the prepreg surfaces. The viscosity of the epoxy resin composition at 65°C is preferably 1000 Pa·s or less, more preferably 900 Pa·s or less, still more preferably 500 Pa·s or less, particularly preferably 300 Pa·s or less, and most preferably 200 Pa·s or less. When the viscosity is 1000 Pa·s or less, impregnation into the reinforcing fiber base material and the moldability of the prepreg are improved. The preferable lower limit and upper limit of the viscosity at 65°C of the epoxy resin composition may be optionally combined, and may be, for example, from 10 to 1000 Pa·s, from 20 to 900 Pa·s, from 50 to 500 Pa·s, from 70 to 300 Pa·s, or from 100 to 200 Pa·s.

The viscosity of the epoxy resin composition at 65°C can be adjusted to a specified range by the content and weight-average molecular weight of the component (B) and the total content of the component (C) and the component (D).

Epoxy Resin Composition of Preferred Example

An epoxy resin composition (hereinafter, also referred to as an "epoxy resin composition (I)") of a preferred example contained in the prepreg according to the present embodiment contains the following components (A1), (B1), (C), and (D), and further contains the following component (E).

component (A1): a urea compound containing 2,4-bis (3,3-dimethylureido)toluene
component (B1): a polyvinyl formal resin having a weight-average molecular weight of 60,000 or greater
component (C): an epoxy resin having an oxazolidone structure
component (D): an epoxy resin (excluding the component (C)) that is solid at 25°C
component (E): at least one selected from dicyandiamide and dicyandiamide derivatives

The median diameter (D50) of the component (A1) as measured by the laser diffraction method is preferably 8.0 μm or less, and more preferably 7.0 μm or less. When the median diameter (D50) of the component (A1) is 8.0 μm or less, the thixotropy of the epoxy resin composition (I) can be enhanced, and resin flow during molding can be suppressed. In addition, since the surface area relative to the mass of the component (A1) is increased, the reaction rate is improved, and the epoxy resin composition (I) can be cured in a shorter amount of time. The median diameter (D50) of the component (A1) can be adjusted by grinding the component (A1) in advance using a bead mill, a three-roll mill, or the like. For measurements through a laser diffraction method, for example, the AEROTRAC SPR (Model: 7340) (available from Nikkiso Co., Ltd.) can be used. The lower limit of the median diameter (D50) of the component (A1) is not particularly limited, but may be, for example, 0.1 μm or greater.

The median diameter (D50) of the component (A1) as measured by the laser diffraction method is preferably equal to or less than the average fiber diameter of all the carbon fibers contained in the reinforcing fiber base material. When the median diameter (D50) is equal to or less than the average fiber diameter of all the carbon fibers, the component (A1) is not localized on the prepreg surfaces, and therefore surface appearance quality can be improved. In addition, since the component (A1) spreads throughout the entire fiber-reinforced composite material, curing defects are less likely to occur, and resin flow during molding can be suppressed.

The content of the component (A1) relative to the total mass of the epoxy resin composition (1) is preferably 2 mass% or more, more preferably 2.5 mass% or more, and even more preferably 3 mass% or more. When the content of the (A1) component is equal to or greater than the above lower limit value, resin flow during molding is suppressed. Moreover, the content of the component (A1) relative to the total mass of the epoxy resin composition (I) is preferably 10 mass% or less, more preferably 9.5 mass% or less, still more preferably 8 mass% or less, and particularly preferably 5 mass% or less. When the content of the component (A1) is equal to or less than the above upper limit value, an epoxy resin composition (I) having excellent storage stability and mechanical properties can be obtained. The preferable lower limit and upper limit of the content of the component (A1) can be optionally combined, and can be, for example, from 2 to 10 mass%, from 2 to 9.5 mass%, from 2.5 to 8 mass%, or from 3 to 5 mass%.

The weight-average molecular weight of the component (B1) is 60,000 or greater, and more preferably 65,000 or greater. When the weight-average molecular weight of the component (B1) is equal to or greater than the above lower limit value, the minimum viscosity of the epoxy resin composition (I) is improved, and resin flow during molding can be suppressed. Moreover, the weight-average molecular weight of the component (B1) is preferably 150,000 or less, and more preferably 145,000 or less. When the weight-average molecular weight of the component (B1) is equal to or less than the above upper limit value, the handling properties of the prepreg at room temperature can be improved while suppressing resin flow during molding. The preferable lower limit and upper limit of the weight-average molecular weight of the component (B1) can be optionally combined, and can be, for example, from 60,000 to 150,000, or from 65,000 to 145,000.

The content of the component (B1) relative to the total mass of the epoxy resin composition (I) is preferably 1 mass% or more, more preferably 1.5 mass% or more, and even more preferably 2 mass% or more. When the content of the component (B1) is equal to or greater than the above lower limit value, the epoxy resin composition (I) can exhibit a high level of thixotropy, and thus resin flow during molding can be suppressed. Moreover, the content of the component (B1) relative to the total mass of the epoxy resin composition (I) is preferably 10 mass% or less, more preferably 9.5 mass% or less, still more preferably 8 mass% or less, and particularly preferably 5 mass% or less. When the content of the component (B1) is equal to or less than the above upper limit value, the handling properties of the prepreg at room temperature are improved. Preferable lower and upper limit values of the content of the component (B1) can be optionally combined, and can be, for example, from 1 to 10 mass%, from 1 to 9.5 mass%, from 1.5 to 8 mass%, or from 2 to 5 mass%.

The components (C) to (E) are as described above, and other components may be further contained.

Relative to the total mass of the epoxy resin composition (I), the composition of the epoxy resin composition (I) may include, for example, from 2 to 10 mass% of the component (A1), from 1 to 10 mass% of the component (B1), and from 30 to 60 mass% of the total of the component (C) and the component (D), and may further include from 4 to 14 mass% of the component (E). However, the total of the respective components may not exceed 100 mass%. The lower limit and upper limit of the contents of each of the components (A1), (B1), and (C) to (E) can be any combination of the lower limit and the upper limit described above for each component.

The epoxy resin composition (I) preferably satisfies the above-described conditions (1) and (2), and more preferably further satisfies the above-described condition (3). The preferred embodiments of the conditions (1) to (3) described above can also be appropriately combined for the epoxy resin composition (I).

Method for Producing Epoxy Resin Composition

An epoxy resin composition is obtained by, for example, mixing the various components described above. Examples of the method for mixing the various components include a method using a mixer such as a three-roll mill, a planetary mixer, a kneader, a homogenizer, or a homo disper.

The epoxy resin composition can be used, for example, for the production of a prepreg by impregnating a reinforcing fiber base material with the epoxy resin composition as described below. In addition, a film of the epoxy resin composition can be obtained by applying the epoxy resin composition to a release paper or the like and then curing the epoxy resin composition. When used as a film, an epoxy resin composition having a viscosity of from 100 to 1,000,000 Pa·s at 30°C provides excellent workability and can be used to adjust the tackiness on the prepreg surface.

Reinforcing Fibers

Reinforcing fibers are present in the prepreg as a reinforcing fiber base material, and are preferably in the form of a sheet. The term reinforcing fiber base material means an aggregate of single reinforcing fibers.

The reinforcing fibers may be long fibers (continuous fibers), or may be short fibers of, for example, from 0.01 to 30 cm. The orientation of fibers in the reinforcing fiber base material may be such that the reinforcing fibers are arranged unidirectionally or are arranged in random directions. Examples of the form of the reinforcing fiber base material include a woven fabric of reinforcing fibers, a nonwoven fabric of reinforcing fibers, and a sheet in which long reinforcing fibers are aligned unidirectionally. From the viewpoint of being able to mold a fiber-reinforced composite material having high specific strength and a high specific elastic modulus, a sheet (hereinafter, may be referred to as a "UD base material") formed of a bundle of reinforcing fibers in which long fibers are aligned in one direction is preferably used for the prepreg, and from the viewpoint of handling ease, a woven fabric of reinforcing fibers is preferably used for the prepreg. The basis weight of the reinforcing fiber base material can be from 10 to 4000 g/m$^2$. The basis weight in the case of a UD base material may be from 10 to 300 g/m$^2$.

Examples of the types of reinforcing fibers include glass fibers, carbon fibers, nylon fibers, aramid fibers, and boron fibers. Among these, carbon fibers are preferable from the viewpoint of the mechanical properties and weight reduction of the resulting fiber-reinforced composite material. The number of carbon fibers in a carbon fiber bundle used in the reinforcing fiber base material is preferably from 1,000 to 70,000. A sheet-like reinforcing fiber base material can be formed by using a plurality of carbon fiber bundles and aligning the fibers in one direction.

From the viewpoint of the rigidity of the resulting fiber-reinforced composite material, the strand tensile strength of the carbon fibers is preferably from 1.5 to 9 GPa, and the strand tensile modulus of the carbon fibers is preferably from 150 to 260 GPa. The strand tensile strength and the strand tensile modulus of the carbon fibers can be measured in accordance with JIS R7601:1986.

The fiber diameter of the carbon fibers may be from 3 to 15 $\mu$m. When the fiber diameter of the carbon fibers is equal to or greater than the above lower limit value, breakage of the carbon fibers and the occurrence of lint accumulation can be suppressed when the carbon fibers move laterally and rub against each other or against a roll surface, or the like during processing of the carbon fibers in processes such as combing or rolling, for example. In addition, curing agent particles can be uniformly dispersed to the inside of the base material, and resin flow during molding can be suppressed.

Method for Producing Prepreg

A prepreg can be obtained, for example, by impregnating the reinforcing fiber base material with the epoxy resin composition described above. The prepreg thus obtained is a prepreg in which the reinforcing fiber base material is impregnated with the epoxy resin composition. Examples of a method for impregnating the reinforcing fiber base material with the epoxy resin composition include, but are not limited to, a wet method in which the epoxy resin composition is dissolved in a solvent such as methyl ethyl ketone or methanol to reduce the viscosity and then impregnated into the reinforcing fiber base material, and a hot melt method (dry method) in which the epoxy resin composition is heated to reduce the viscosity and then impregnated into the reinforcing fiber base material.

The wet method is a method in which the reinforcing fiber base material is immersed in a solution of the epoxy resin composition, after which the base material is removed therefrom, and the solvent is evaporated using, for example, an oven. The hot melt method includes a method of directly impregnating the reinforcing fiber base material with an epoxy resin composition for which the viscosity has been reduced by heating, and a method of first applying the epoxy resin composition to a surface of a base material such as a release paper to produce a film, then stacking the film on one or both sides of the reinforcing fiber base material, and heating and pressurizing the stacked product to impregnate the reinforcing fiber base material with the resin. The coating layer obtained by applying the epoxy resin composition to the surface of the base material such as a release paper may be used in the hot melt method in an uncured state, or may be used in the hot melt method after the coating layer has been cured. According to the hot melt method, there is substantially no solvent remaining in the prepreg, and thus the hot melt method is preferable.

The prepreg can be produced, for example, by the following procedures. First, a matrix resin is applied to one surface of a carrier film (first carrier film). Similarly, another carrier film (second carrier film) having a matrix resin applied to one surface thereof is prepared. Next, the surfaces of the first carrier film and the second carrier film on which the matrix resin is applied are oriented so as to face the reinforcing fiber base material, and a laminate in which the reinforcing fiber base material and the matrix resin are sandwiched between the first carrier film and the second carrier film is formed. The obtained laminate is pressurized to impregnate the reinforcing fiber base material with the matrix resin, and thereby a prepreg is obtained.

The content of the epoxy resin composition (hereinafter, also referred to as the "resin content") in the prepreg with relative to the total mass (100 mass%) of the prepreg is preferably from 15 to 50 mass%, more preferably from 20 to 45 mass%, and even more preferably from 25 to 40 mass%. When the resin content is equal to or greater than the above lower limit value, the adhesion between the reinforcing fibers and the epoxy resin composition can be sufficiently ensured. Moreover, when the resin content is equal to or less than the above upper limit value, the mechanical properties of the fiber-reinforced composite material are further enhanced.

Fiber-Reinforced Composite Material

A fiber-reinforced composite material can be obtained by curing the prepreg. That is, the fiber-reinforced composite material contains a cured product of the resin contained in the prepreg and reinforcing fibers.

One embodiment of the fiber-reinforced composite material is formed from a reinforcing fiber base material and a cured product of an epoxy resin composition, with the epoxy resin composition containing the above-described components (A), (B), (C), and (D). In addition, when the epoxy resin composition satisfies the above-described conditions (1) and (2), the desired effect can be achieved in a short amount of time, and resin flow during molding can be suppressed.

One embodiment of the fiber-reinforced composite material is formed from a reinforcing fiber base material and a cured product of an epoxy resin composition (I), with the epoxy resin composition (I) containing the above-described components (A1), (B1), (C), and (D).

Method for Producing Fiber-Reinforced Composite Material

A fiber-reinforced composite material can be molded and obtained, for example, by a method in which two or more of the prepregs described above are laminated, after which the epoxy resin composition is heated and cured while applying pressure to the obtained laminate. Examples of the molding method include, but are not limited to, a press molding method, an autoclave molding method, a bagging molding method, a wrapping tape method, an internal pressure molding method, a sheet wrap molding method, Resin Transfer Molding (RTM) in which a filament or preform of reinforcing fibers is impregnated with the epoxy resin composition and cured to yield a molded body, Vacuum assisted Resin Transfer Molding (VaRTM), filament winding, and Resin Film Infusion (RFI).

The autoclave molding method is a method in which prepregs are laminated, covered with a backing film, and then cured by pressurization and heating while degassing the inside of the laminate. Since the fiber orientation can be precisely controlled and the generation of voids is reduced, a high quality molded body having excellent mechanical properties can be obtained.

The wrapping tape method is a method in which a prepreg is wound around a core metal such as a mandrel to form a tubular molded body of a fiber-reinforced composite resin (fiber-reinforced composite resin body), and is preferably used when a rod-shaped body such as a golf shaft or a fishing rod is to be produced. More specifically, the wrapping tape method is a method in which a prepreg is wound around a mandrel, a wrapping tape made of a thermoplastic film is wound around the outside of the prepreg to fix the prepreg and apply pressure thereto, and the epoxy resin composition in the prepreg is heated and cured in an oven, after which the core metal is removed, and a fiber-reinforced composite resin tubular body is obtained.

The internal pressure molding method is a method in which a preform obtained by winding a prepreg around an internal pressure-imparting body such as a tube made of a thermoplastic resin is set in a mold, and then a high-pressure gas is introduced into the internal pressure-imparting body to apply pressure, and at the same time, the mold is heated to mold the preform. The heating temperature is not particularly limited, but a higher temperature is preferred because the molding time can be shortened. Specifically, the heating temperature is preferably 120°C or higher, and more preferably 140°C or higher. However, if the heating temperature is too high, a significant amount of time is required to lower the temperature of the mold. In addition, when the prepreg is set in the mold without lowering the temperature, curing may be initiated, and the epoxy resin composition may not spread to every corner of the final molded body. This method is preferably used when molding a complex shaped article such as a golf shaft, a bat, or a racket for tennis, badminton, or the like. In the internal pressure molding method, curing is accelerated due to a high molding pressure, but resin flow during molding increases.

Fiber-Reinforced Composite Material Applications

The fiber-reinforced composite material resin of the present invention is suitably used in sports applications, general industrial applications, and aerospace applications. More specifically, in sports applications, the fiber-reinforced composite material is suitably used in golf shafts, fishing rods, rackets for tennis and badminton, frames for bicycles and the like, sticks for hockey and the like, and ski poles. In general industrial applications, the fiber-reinforced composite material is suitably used in structural materials of moving bodies such as automobiles, ships, and railway vehicles, and also in drive shafts, plate springs, wind turbine blades, pressure vessels, flywheels, papermaking rollers, roofing materials, cables, repair and reinforcement materials, and the like.

Method for Producing Molded Body

The method for producing a molded body of the present invention includes the following step (1). The method for producing a molded body of the present invention is preferably a method for producing a tubular molded body, and more preferably includes the following step (2).

Step (1): heating a prepreg containing an epoxy resin composition and reinforcing fibers and being placed in a mold, to 130°C or higher.

Step (2): expanding a medium from the inside of a tubular precursor obtained by arranging the prepreg in a tubular shape, and thereby pressing the tubular precursor against the mold and molding the tubular precursor.

Hereinafter, a case in which a tubular molded body is produced will be described as an example, but the shape of the molded body to be produced is not limited to a tubular shape.

In the case of producing a tubular molded body, the prepreg is arranged in a tubular shape to form a tubular precursor, and then heated. The tubular precursor can be obtained by winding a prepreg containing a resin composition and reinforcing fibers around a medium (internal pressure-imparting body) such as a tube made of a thermoplastic resin. The obtained tubular precursor is set in a mold and heated and molded at a temperature of 130°C or higher, and preferably 140°C or higher. The molding can be carried out by introducing a high-pressure gas into the internal pressure-imparting body to expand the medium, and thereby pressing the medium against the mold from the inside of the tubular precursor.

The epoxy resin composition contained in the prepreg used in the method for producing a molded body of the present invention contains the following components (A1) and (B1), and may further contain the following components (C) and (D).

component (A1): 2,4-bis(3,3-dimethylureido)toluene

component (B1): a polyvinyl formal resin having a weight-average molecular weight of 60,000 or greater

component (C): an epoxy resin having an oxazolidone structure

component (D): an epoxy resin (excluding the component (C)) that is solid at 25°C

In preferred embodiments and the like, the contents of the components (A1) and (B1) are the same as those of the components (A) and (B) described above. Moreover, the specific components, contents, preferred embodiments, and the like of the component (C) and the component (D) are as described above.

The total content of the component (C) and the component (D) relative to the total mass of the epoxy resin composition is preferably from 30 to 60 mass%, and more preferably from 35 to 60 mass%. When the total content of the component (C) and the component (D) is equal to or greater than the above lower limit value, resin flow during molding can be suppressed. Moreover, when the total content of the component (C) and the component (D) is equal to or less than the above upper limit value, sufficient tackiness is obtained on the surface of the prepreg.

As the prepreg used in the method for producing a molded body of the present invention, for example, a prepreg containing the epoxy resin composition (I) described above can be used.

In the method for producing a molded body of the present invention, when the tubular molded body has an annular curved portion, the method may further include bending the tubular precursor into an annular shape. Examples of the tubular molded body having an annular curved portion include a molded body having a tubular frame configuring an annular racket head, such as a tennis or badminton racket.

The present invention will be described more specifically below on the basis of examples, but the present invention is not limited in any way by the following examples. Values of various production conditions and evaluation results in the following examples have significance as preferable values of upper limits or lower limits in the embodiments of the present invention, and a preferable range may be a range defined by a combination of an upper or lower limit value described above and a value in the following examples or values between the examples.

Raw Material

Component (A)

Component (A1)

- Omicure 24: 2,4-bis(3,3-dimethylureido)toluene, median diameter (D50) of 6.0 $\mu$m, "Omicure24" available from PTI Japan Ltd.

Components Other than Component (A1)

- Omicure 94: 3-phenyl-1,1-dimethylurea, median diameter (D50) of 9.5 $\mu$m, "Omicure 94" available from PTI Japan Ltd.
- DCMU-99: 3-(3,4-dichlorophenyl)-1,1-dimethylurea, median diameter (D50) of 11.4 $\mu$m, "DCMU-99" available from Hodogaya Chemical Co., Ltd.

Component (B)

Component (B1)

- VINYLEC E: Fine powder of polyvinyl formal resin, "VINYLEC E" available from JNC Corporation

Components Other than Component (B1)

- VINYLEC K: Fine powder of polyvinyl formal resin, "VINYLEC K" available from JNC Corporation
- 5003MP: Fine powder of polyethersulfone resin, "Sumikaexcel 5003MP" available from Sumitomo Chemical Co., Ltd.

Component (C)

- YD-952: Epoxy resin having an oxazolidone structure, epoxy equivalent of 340 g/eq, "YD-952" available from Nippon Steel Chemical & Material Co., Ltd.

Component (D)

- YD-012: Solid bisphenol A-type epoxy resin, epoxy equivalent of 655 g/eq, "YD-012" available from Nippon Steel Chemical & Material Co., Ltd.
- N-680: Cresol-novolac type epoxy resin, epoxy equivalent of 211 g/eq, "N-680" available from DIC Corporation

Component (E)

- Dicyanex 1400F: Dicyandiamide, "Dicyanex 1400F" available from Evonik Japan Co., Ltd.
- Dicy 15: Dicyandiamide, "jER Cure Dicy 15" available from Mitsubishi Chemical Corporation

Other Components

- YD-128: Liquid bisphenol A-type epoxy resin, epoxy equivalent of 189 g/eq, "YD-128" available from Nippon Steel Chemical & Material Co., Ltd.
- AEROSIL RY-200, hydrophobic silicon dioxide, "AEROSIL RY-200" available from Nippon Aerosil Co., Ltd.

Carbon Fibers

- Carbon fibers: "Pyrofil TR50S15L" available from Mitsubishi Chemical Corporation (average fiber diameter: 7 $\mu$m, specific weight: 1.82, tensile modulus: 235 GPa)

Rheometer Evaluation

The epoxy resin composition was measured under a condition of 2°C/min using a rheometer (HAAKE MARS 40, available from Thermo Fisher Scientific, Inc.), and the lowest viscosity was recorded as the minimum viscosity.
The viscosity of the epoxy resin composition at 65°C was also measured using the same rheometer.

Curelastometer Evaluation

A gel time value was obtained by measuring the epoxy resin composition at 145°C using a Curelastometer (trade name, available from JSR Trading Co., Ltd., 7 Type P).

Resin Flow Evaluation

The resin flow rate during molding was measured according to the following procedures 1 to 5.

1. Prepregs were each cut to a size of 100 mm by 100 mm, and eight prepregs were stacked so that the fiber directions were [0° / 90° / 0° / 90° / 90° / 0° / 90° / 0°] in a plan view, and thereby a laminate was produced.
2. The weight W1 of the obtained laminate was measured.
3. The laminate was heated at 4°C/min under a pressure of 0.6 MPa in an autoclave, and was then maintained at 145°C for 30 minutes to be thermally cured and molded, and thereby a fiber-reinforced composite material having a thickness of 1.0 mm was produced.
4. Resin flash protruding from the fiber-reinforced composite material was removed, and the weight W2 of the remaining fiber-reinforced composite material was measured.
5. The resin flow rate was calculated from the measured values of the W1 and the W2 using the following equation.

$$\text{Resin flow rate } [\%] = [(W1 - W2)/W1] \times 100$$

Measurement of Weight-Average Molecular Weight

To determine the weight-average molecular weight of VINYLEC E and VINYLEC K serving as the component (B), a 0.05 mass% tetrahydrofuran solution was prepared, and the weight-average molecular weight in terms of standard polystyrene was determined under the following analysis conditions.

Analysis Conditions

Device: HLC-8320 GPC available from Tosoh Corporation
Column: A column in which the following columns (1) to (4) were connected in this order

(1) TSK Guard Column Super HZ-L (guard column), 4.6 mm inner diameter (ID) × 2.0 cm L
(2) TSKgel Super HZM-M, 4.6 mm I • D × 15 cm L
(3) TSKgel Super HZM-M, 4.6 mm I • D × 15 cm L
(4) TSKgel Super HZ2000, 4.6 mm I • D × 15 cm L

Constant temperature bath temperature: 40°C
Mobile phase: tetrahydrofuran (stabilizer BHT)
Flow rate: 0.35 mL/min
Injection amount: 10 μL
Detector: RI

To determine the weight-average molecular weight of 5003MP as the component (B), a 0.4 mass% dimethylformamide solution was prepared, and the weight-average molecular weight in terms of standard polystyrene was determined under the following analysis conditions.

Device: HLC-8420 high-speed GPC available from Tosoh Corporation
Guard column: TSK Guard Column α (6.0 mm ID × 4.0 cm L) available from Tosoh Corporation
Sample column: Three α-M columns (7.8 mm ID × 30 cm L) available from Tosoh Corporation were connected.
Constant temperature bath temperature: 40°C
Mobile phase: Dimethylformamide (containing 20 mM LiBr)
Flow rate: 1.0 mL/min
Injection amount: 100 μL

Detector: RI

Examples 1 to 6 and Comparative Examples 1 to 9

Production of Epoxy Resin Composition

Epoxy resin compositions were prepared in the following manner according to the formulations shown in Table 1.

First, the component (B) and a liquid bisphenol A type epoxy resin were weighed in a flask, heated to 150°C using an oil bath, and mixed until the component (B) was dissolved. Subsequently, the mixture was cooled to 100°C, and the component (C), the component (D), and silicon dioxide were added thereto, followed by stirring and mixing. Subsequently, the mixture was cooled to 65°C, and the component (A) and the component (E) were added thereto, followed by stirring and mixing, and thereby an epoxy resin composition was obtained. The obtained epoxy resin compositions were each subjected to a rheometer evaluation and a Curelastometer evaluation, and the results are shown in Tables 1 to 3.

Production of Prepreg

Each of the obtained epoxy resin compositions was formed into a film using a hot melt coater ("R-HC" available from Hirano Tecseed Co., Ltd.), and a resin film having a resin basis weight of 32.3 $g/m^2$ was thereby prepared. This resin film was affixed to both surfaces of a carbon fiber sheet having a fiber basis weight of 120 $g/m^2$ and obtained by aligning carbon fibers, and the carbon fiber sheet was impregnated with the epoxy resin composition of the resin film using a heated roll, and a prepreg having a fiber basis weight of 120 $g/m^2$ and a resin content of 35 mass% was thereby obtained.

Production of Fiber-Reinforced Composite Material

The obtained prepreg was cut to 100 mm × 100 mm, and eight cut prepregs were stacked so that the fiber directions were [0° / 90° / 0° / 90° / 90° / 0° / 90° / 0°] from the bottom in a plan view, and thereby a laminate was obtained. The laminate was heated at 4°C/min under a pressure of 0.6 MPa in an autoclave, and was then maintained at a temperature of 145°C for 30 minutes to be thermally cured and thereby molded, and a fiber-reinforced composite material having a thickness of 1.0 mm was obtained. In addition, the resin flow rate during molding was evaluated according to the evaluation method described above. The results are shown in Tables 1 to 3.

[Table 1]

| | | | Example 1 | Example 2 | Example 3 | Example 4 | Example 5 |
|---|---|---|---|---|---|---|---|
| Component (A) [parts by mass] | TBDMU | Omicure 24 | 4.0 | 4.4 | 4.8 | 4.0 | 4.4 |
| Component (B) [parts by mass] | Polyvinyl formal resin | VINYLEC E | 3.0 | 3.0 | 3.0 | 3.0 | 3.0 |
| | | VINYLEC K | | | | | |
| | Polyethersulfone resin | 5003MP | | | | | |
| Component (C) [parts by mass] | Epoxy resin having oxazolidone structure | YD-952 | 30.0 | 30.0 | 30.0 | 30.0 | 30.0 |
| Component (D) [parts by mass] | Solid bisphenol A-type epoxy resin | YD-012 | 29.0 | 29.0 | 29.0 | 29.0 | 29.0 |
| | Cresol novolac-type epoxy resin | N-680 | | | | | |
| Component (E) [parts by mass] I | Dicyandiamide | Dicyanex 1400F | 5.0 | 5.5 | 6.0 | | |
| | | Dicy 15 | | | | 5.0 | 5.5 |

(continued)

| | | | Example 1 | Example 2 | Example 3 | Example 4 | Example 5 |
|---|---|---|---|---|---|---|---|
| Other components [parts by mass] | Liquid bisphenol A-type epoxy resin | YD-128 | 53.0 | 54.2 | 55.4 | 53.0 | 54.2 |
| | Silicon dioxide | AEROSIL RY-200 | | | | | |
| Weight-average molecular weight Mw (x $10^4$) of component (B) | | | 7.31 | 7.31 | 7.31 | 7.31 | 7.31 |
| Content [(parts by mass)/(100 parts by mass of epoxy resin composition)] | Component (A) | | 3.2 | 3.5 | 3.7 | 3.2 | 3.5 |
| | Component (B) | | 2.4 | 2.4 | 2.3 | 2.4 | 2.4 |
| | Component (D) | | 23.4 | 23.0 | 22.6 | 23.4 | 23.0 |
| | Component (C) and component (D) | | 47.6 | 46.8 | 46.0 | 47.6 | 46.8 |
| Curelastometer evaluation (145°C) | Gel time value [min] | | 3.7 | 3.3 | 3.0 | 3.3 | 3.3 |
| Rheometer evaluation | Viscosity (Pa·s) at 65°C | | 115 | 101 | 106 | 122 | 118 |
| | Minimum viscosity [Pa·s] | | 3.8 | 3.4 | 4.1 | 3.8 | 3.8 |
| | Temperature [°C] at minimum viscosity | | 106 | 105 | 104 | 106 | 105 |
| Resin flow rate | W1 [g] | | 15.0 | 14.9 | 15.1 | 14.9 | 15.1 |
| | W2 [g] | | 14.8 | 14.7 | 15.0 | 14.7 | 14.9 |
| | Resin flow rate[%] | | 1.27 | 1.14 | 0.73 | 1.10 | 1.13 |

[Table 2]

| | | | Example 6 | Comparative Example 1 | Comparative Example 2 | Comparative Example 3 | Comparative Example 4 |
|---|---|---|---|---|---|---|---|
| Component (A) [parts by mass] | TBDMU | Omieure 24 | 4.8 | 4.0 | 4.0 | 4.0 | 4.0 |
| Component (B) [parts by mass] | Polyvinyl formal resin | VINYLEC E | 3.0 | | | | |
| | | VINYLEC K | | | 3.0 | | |
| | Polyethersulfone resin | 5003MP | | | | 3.0 | |
| Component (C) [parts by mass] | Epoxy resin having oxazolidone structure | YD-952 | 30.0 | 30.0 | 30.0 | 30.0 | 30.0 |
| Component (D) [parts by mass] | Solid bisphenol A-type epoxy resin | YD-012 | 29.0 | 29.0 | 29.0 | 29.0 | 29.0 |
| | Cresol novolac-type epoxy resin | N-680 | | | | | |
| Component (E) [parts by mass] | Dicyandiamide | Dicyanex 1400F | | 5.0 | 5.0 | 5.0 | 5.0 |
| | | Dicy 15 | 6.0 | | | | |
| Other components [parts by mass] | Liquid bisphenol A-type epoxy resin | YD-128 | 55.4 | 53.0 | 53.0 | 53.0 | 53.0 |
| | Silicon dioxide | AEROSIL RY-200 | | | | | 3.0 |
| Weight-average molecular weight Mw (x $10^4$) of component (B) | | | 7.31 | - | 3.59 | 6.24 | - |
| Content [(parts by mass)/(100 parts by mass of epoxy resin composition)] | | Component (A) | 3.7 | 3.3 | 3.2 | 3.2 | 3.2 |
| | | Component (B) | 2.3 | 0.0 | 2.4 | 2.4 | 0.0 |
| | | Component (D) | 22.6 | 24.0 | 23.4 | 23.4 | 23.4 |
| | | Component (C) and component (D) | 46.0 | 48.8 | 47.6 | 47.6 | 47.6 |
| Curelastometer evaluation (145°C) | | Gel time value [min] | 3.1 | 3.7 | 3.8 | 3.6 | 3.6 |

(continued)

| | | Example 6 | Comparative Example 1 | Comparative Example 2 | Comparative Example 3 | Comparative Example 4 |
|---|---|---|---|---|---|---|
| Rheometer evaluation | Viscosity (Pa·s) at 65°C | 125 | 24 | 65 | 64 | 54 |
| | Minimum viscosity [Pa·s] | 4.7 | 0.9 | 1.3 | 1.7 | 1.4 |
| | Temperature [°C] at minimum viscosity | 103 | 105 | 109 | 106 | 107 |
| Resin flow rate | W1 [g] | 15.2 | 14.8 | 15.5 | 15.2 | 15.1 |
| | W2 [g] | 15.0 | 14.4 | 15.3 | 14.9 | 14.8 |
| | Resin flow rate[%] | 1.05 | 2.80 | 1.70 | 2.40 | 1.90 |

[Table 3]

| | | | Comparative Example 5 | Comparative Example 6 | Comparative Example 7 | Comparative Example 8 | Comparative Example 9 |
|---|---|---|---|---|---|---|---|
| Component (A) [parts by mass] | TBDMU | Omicure 24 | | | 4.0 | 4.8 | 4.0 |
| | PDMU | Omicure 94 | 4.0 | | | | |
| | DCMU | DCMU-99 | | 4.0 | | | |
| Component (B) [parts by mass] | Polyvinyl formal resin | VINYLEC E | 3.0 | 3.0 | 3.0 | 3.0 | 3.0 |
| | | VINYLLEC K | | | | | |
| | Polyethersulfone resin | 5003MP | | | | | |
| Component (C) [parts by mass] | Epoxy resin having oxazolidone structure | YD-952 | 30.0 | 30.0 | 30.0 | 30.0 | |
| Component (D) [parts by mass] | Solid bisphenol A-type epoxy resin | YD-012 | 29.0 | 29.0 | | | 59.0 |
| | Cresol novolac-type epoxy resin | N-680 | | | 29.0 | 29.0 | |
| Component (E) [parts by mass] | Dicyandiamide | Dicyanex 1400F | 5.0 | 5.0 | | | |
| | | Dicy 15 | | | 5.0 | 6.0 | 5.0 |
| Other components [parts by mass] | Liquid bisphenol A-type epoxy resin | YD-128 | 53.0 | 53.0 | 53.0 | 55.4 | 53.0 |
| | Silicon dioxide | AEROSIL RY-200 | | | | | |
| Weight-average molecular weight Mw (x $10^4$) of component (B) | | | 7.31 | 7.31 | 7.31 | 7.31 | 7.31 |
| Content [(parts by mass)/(100 parts by mass of epoxy resin composition)] | | Component (A) | 3.2 | 3.2 | 3.2 | 3.7 | 3.2 |
| | | Component (B) | 2.4 | 2.4 | 2.4 | 2.3 | 2.4 |
| | Component (D) | | 23.4 | 23.4 | 23.4 | 22.6 | 47.6 |
| | Component (C) and component (D) | | 47.6 | 47.6 | 47.6 | 46.0 | 47.6 |
| Curelastometer evaluation (145°C) | Gel time value [min] | | 5.4 | 5.7 | 3.1 | 2.4 | 3.9 |

EP 4 786 528 A1

22

(continued)

| | | Comparative Example 5 | Comparative Example 6 | Comparative Example 7 | Comparative Example 8 | Comparative Example 9 |
|---|---|---|---|---|---|---|
| Rheometer evaluation | Viscosity (Pa·s) at 65°C | 71 | 91 | 47 | 33 | 132 |
| | Minimum viscosity [Pa·s] | 1.8 | 1.9 | 1.1 | 1.0 | 3.3 |
| | Temperature [°C] at minimum viscosity | 111 | 112 | 110 | 110 | 107 |
| Resin flow rate | W1 [g] | 15.0 | 15.1 | 15.0 | 14.7 | 15.5 |
| | W2 [g] | 14.7 | 14.8 | 14.7 | 14.4 | 15.3 |
| | Resin flow rate[%] | 2.00 | 1.90 | 2.10 | 1.80 | 1.40 |

As shown in Tables 1 to 3, in Examples 1 to 6 using an epoxy resin composition satisfying the requirements of the present invention, the resin flow rate during molding was significantly suppressed in the production of the fiber-reinforced composite material, as compared with Comparative Examples 1 to 9, which did not satisfy the requirements of the present invention. It is presumed that the resin flow rate would be similarly suppressed with other molding methods such as a press molding method, a wrapping tape method, an internal pressure molding method, a sheet wrap molding method, RTM, and VaRTM.

The present application claims the rights of priority on the basis of Japanese Patent Application No. 2023-169784 filed in Japan on September 29, 2023, the content of which is incorporated herein by reference.

**Claims**

1. A prepreg comprising an epoxy resin composition and reinforcing fibers, the epoxy resin composition containing the following components (A), (B), (C), and (D), and satisfying the following conditions (1) and (2):

   component (A): a urea compound
   component (B): a thermoplastic resin
   component (C): an epoxy resin having an oxazolidone structure
   component (D): a bisphenol-type epoxy resin (excluding the component (C)) that is solid at 25°C
   condition (1): a minimum viscosity of the epoxy resin composition measured with a rheometer under a condition of 2°C/min is in a range of from 3.0 to 6.0 Pa·s, and
   condition (2): a gel time value of the epoxy resin composition measured by a Curelastometer (trade name) at 145°C is in a range of from 2.0 to 5.0 min.

2. The prepreg according to claim 1, wherein a median diameter (D50) of the component (A) as measured by a laser diffraction method is 8.0 $\mu$m or less.

3. The prepreg according to claim 1 or 2, wherein the component (A) includes 2,4-bis(3,3-dimethylureido)toluene.

4. The prepreg according to claim 1 or 2, wherein the component (B) is a thermoplastic resin that is soluble in a mixture of epoxy resins contained in the epoxy resin composition.

5. The prepreg according to claim 1 or 2, wherein the component (B) has a weight-average molecular weight of 60,000 or greater.

6. The prepreg according to claim 1 or 2, wherein the component (B) includes a polyvinyl formal resin.

7. The prepreg according to claim 1 or 2, wherein the component (C) is solid at 25°C.

8. The prepreg according to claim 1 or 2, wherein the component (D) has an epoxy equivalent of from 300 to 1000 g/eq.

9. The prepreg according to claim 1 or 2, wherein the component (D) is a bisphenol A type epoxy resin.

10. The prepreg according to claim 1 or 2, wherein the prepreg contains from 2 to 10 mass% of the component (A) relative to a total mass of the epoxy resin composition.

11. The prepreg according to claim 1 or 2, wherein the prepreg contains from 1 to 10 mass% of the component (B) relative to a total mass of the epoxy resin composition.

12. The prepreg according to claim 1 or 2, wherein a total content of the component (C) and the component (D) is from 30 to 60 mass% relative to a total mass of the epoxy resin composition.

13. The prepreg according to claim 1 or 2, further satisfying the following condition (3):
    condition (3): the epoxy resin composition has a viscosity at 65°C in a range of from 10 to 1000 Pa·s.

14. The prepreg according to claim 1 or 2, further comprising the following component (E):
    component (E): at least one selected from dicyandiamide and dicyandiamide derivatives.

**15.** The prepreg according to claim 1 or 2, wherein the reinforcing fibers include carbon fibers.

**16.** A fiber-reinforced composite material produced by curing the prepreg described in claim 1 or 2.

**17.** A prepreg comprising an epoxy resin composition and reinforcing fibers,
the epoxy resin composition containing the following components (A1), (B1), (C), and (D):

> component (A1): a urea compound containing 2,4-bis (3,3-dimethylureido)toluene
> component (B1): a polyvinyl formal resin having a weight-average molecular weight of 60,000 or greater
> component (C): an epoxy resin having an oxazolidone structure
> component (D): a bisphenol-type epoxy resin (excluding the component (C)) that is solid at 25°C.

**18.** The prepreg according to claim 17, wherein the prepreg satisfies the following conditions (1) and (2):

> condition (1): a minimum viscosity of the epoxy resin composition measured with a rheometer under a condition of 2°C/min is in a range of from 3.0 to 6.0 Pa·s, and
> condition (2): a gel time value of the epoxy resin composition measured by a Curelastometer (trade name) at 145°C is in a range of from 2.0 to 5.0 min.

**19.** The prepreg according to claim 17 or 18, wherein a median diameter (D50) of the component (A1) as measured by a laser diffraction method is 8.0 μm or less.

**20.** The prepreg according to claim 17 or 18, wherein the component (C) is solid at 25°C.

**21.** The prepreg according to claim 17 or 18, wherein the component (D) has an epoxy equivalent of from 300 to 1000 g/eq.

**22.** The prepreg according to claim 17 or 18, wherein the component (D) is a bisphenol A type epoxy resin.

**23.** The prepreg according to claim 17 or 18, wherein the prepreg contains from 2 to 10 mass% of the component (A1) relative to a total mass of the epoxy resin composition.

**24.** The prepreg according to claim 17 or 18, wherein the prepreg contains from 1 to 10 mass% of the component (B1) relative to a total mass of the epoxy resin composition.

**25.** The prepreg according to claim 17 or 18, wherein a total content of the component (C) and the component (D) is from 30 to 60 mass% relative to a total mass of the epoxy resin composition.

**26.** The prepreg according to claim 17 or 18, further satisfying the following condition (3):
condition (3): the epoxy resin composition has a viscosity at 65°C in a range of from 10 to 1000 Pa·s.

**27.** The prepreg according to claim 17 or 18, further comprising the following component (E):
component (E): at least one selected from dicyandiamide and dicyandiamide derivatives.

**28.** The prepreg according to claim 17 or 18, wherein the reinforcing fibers include carbon fibers.

**29.** A method for producing a molded body,

> the method comprising heating a prepreg containing an epoxy resin composition and reinforcing fibers to a temperature of 130°C or higher with the prepreg being placed in a mold,
> the epoxy resin composition containing the following components (A1) and (B1):

> > component (A1): 2,4-bis(3,3-dimethylureido)toluene
> > component (B1): a polyvinyl formal resin having a weight-average molecular weight of 60,000 or greater.

**30.** The method for producing a molded body according to claim 29, wherein the prepreg is arranged in a tubular shape and heated to produce a tubular molded body.

**31.** The method for producing a molded body according to claim 30, the method further comprising expanding a medium from an inside of a tubular precursor with the prepreg arranged in a tubular shape, and thereby pressing the tubular precursor against a mold and molding the tubular precursor.

32. The method for producing a molded body according to claim 29 or 30, wherein the epoxy resin composition further contains the following component (C):
component (C): an epoxy resin having an oxazolidone structure.

33. The method for producing a molded body according to claim 29 or 30, wherein the epoxy resin composition further includes the following component (D):
component (D): a bisphenol-type epoxy resin that is solid at 25°C (excluding a component (C) of an epoxy resin that is solid at 25°C).

34. The method for producing a molded body according to claim 29 or 30, wherein a total content of the following component (C) and the following component (D) is from 30 to 60 mass% relative to a total mass of the epoxy resin composition:

component (C): an epoxy resin having an oxazolidone structure
component (D): a bisphenol-type epoxy resin (excluding the component (C)) that is solid at 25°C.

35. The method for producing a molded body according to claim 31,
wherein the tubular molded body has an annular curved portion, and
the method includes bending the tubular precursor into an annular shape.

## INTERNATIONAL SEARCH REPORT

| International application No. |
|---|
| **PCT/JP2024/033602** |

**A. CLASSIFICATION OF SUBJECT MATTER**

*C08J 5/24*(2006.01)i; *B29C 70/42*(2006.01)i; *C08G 59/20*(2006.01)i
FI: C08J5/24 CFC; C08G59/20; B29C70/42

According to International Patent Classification (IPC) or to both national classification and IPC

**B. FIELDS SEARCHED**

Minimum documentation searched (classification system followed by classification symbols)

B29B11/16;15/08-15/14; C08J5/04-5/10;5/24; B29C70/42; C08G59/00-59/72

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-097798 A (ASAHI KASEI KABUSHIKI KAISHA) 01 July 2022 (2022-07-01) whole document, in particular, claims, examples | 1-35 |
| A | JP 2020-204026 A (TORAY INDUSTRIES, INC.) 24 December 2020 (2020-12-24) whole document, in particular, examples | 1-35 |
| A | JP 2017-013456 A (TORAY INDUSTRIES, INC.) 19 January 2017 (2017-01-19) whole document, in particular, examples | 1-35 |
| A | JP 2003-128764 A (TORAY COMPOSITES (AMERICA) INC.) 08 May 2003 (2003-05-08) whole document, in particular, claims, examples | 1-35 |
| A | WO 2018/117214 A1 (MITSUBISHI CHEMICAL CORPORATION) 28 June 2018 (2018-06-28) whole document, in particular, claims, examples | 1-35 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 November 2024** | **03 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/033602**

### C. DOCUMENTS CONSIDERED TO BE RELEVANT

| Category* | Citation of document, with indication, where appropriate, of the relevant passages | Relevant to claim No. |
|---|---|---|
| A | JP 2017-149988 A (MITSUBISHI CHEMICAL CORPORATION) 31 August 2017 (2017-08-31) whole document, in particular, claims, examples | 1-35 |
| A | JP 2021-147496 A (MITSUBISHI CHEMICAL CORPORATION) 27 September 2021 (2021-09-27) whole document, in particular, examples | 1-35 |

Form PCT/ISA/210 (second sheet) (July 2022)

**INTERNATIONAL SEARCH REPORT**
Information on patent family members

International application No.

**PCT/JP2024/033602**

| Patent document cited in search report | | | Publication date (day/month/year) | Patent family member(s) | Publication date (day/month/year) |
|---|---|---|---|---|---|
| JP | 2022-097798 | A | 01 July 2022 | (Family: none) | |
| JP | 2020-204026 | A | 24 December 2020 | (Family: none) | |
| JP | 2017-013456 | A | 19 January 2017 | US 2018/0186134 A1 whole document, in particular, examples WO 2017/006832 A1 EP 3321057 A1 TW 201707923 A CN 107708955 A KR 10-2018-0022796 A | |
| JP | 2003-128764 | A | 08 May 2003 | US 2003/0082385 A1 whole document, in particular, claims, examples US 2003/0124355 A1 EP 1279688 A1 AT 297426 T | |
| WO | 2018/117214 | A1 | 28 June 2018 | US 2019/0330464 A1 whole document, in particular, claims, examples CN 110088163 A TW 201829608 A | |
| JP | 2017-149988 | A | 31 August 2017 | US 2018/0155489 A1 whole document, in particular, claims, examples WO 2016/199857 A1 EP 3309190 A1 TW 201708349 A KR 10-2017-0135973 A CN 107709402 A | |
| JP | 2021-147496 | A | 27 September 2021 | (Family: none) | |

Form PCT/ISA/210 (patent family annex) (July 2022)

**REFERENCES CITED IN THE DESCRIPTION**

**Patent documents cited in the description**

- WO 1998044017 A
- WO 2020080474 A

- JP 2023169784 A